# EUROPÄISCHE PATENTSCHRIFT

(11) **EP 1 088 616 B1**
(45) Veröffentlichungstag und Bekanntmachung des Hinweises auf die Patenterteilung: **19.01.2005**
(21) Anmeldenummer: 00120215.9
(22) Anmeldetag: 25.09.2000
(51) Int. Cl.: B23Q 1/28, B23Q 1/52

(54) **Dreh- oder Schwenkeinrichtung einer Werkzeugmaschine**
Rotating or pivoting device in a machine tool
Dispositif de rotation ou pivotement d'une machine-outil

(30) Priorität: 28.09.1999 DE 19946424
(43) Veröffentlichungstag der Anmeldung: 04.04.2001
(73) Patentinhaber: DECKEL MAHO Pfronten GmbH, 87459 Pfronten (DE)
(72) Erfinder: Kschier, Uwe, 87629 Füssen (DE)
(74) Vertreter: Beetz & Partner Patentanwälte

(56) Entgegenhaltungen:
- US-A- 5 918 510
- PATENT ABSTRACTS OF JAPAN vol. 1999, no. 05, 31. Mai 1999 (1999-05-31) & JP 11 028631 A (OSAKA KIKO CO LTD), 2. Februar 1999 (1999-02-02)
- PATENT ABSTRACTS OF JAPAN vol. 013, no. 094 (M-804), 6. März 1989 (1989-03-06) & JP 63 288607 A (MITSUBISHI HEAVY IND LTD), 25. November 1988 (1988-11-25)
- PATENT ABSTRACTS OF JAPAN vol. 012, no. 376 (M-750), 7. Oktober 1988 (1988-10-07) & JP 63 127843 A (MITSUI SEIKI KOGYO CO LTD), 31. Mai 1988 (1988-05-31)

## Beschreibung

Die Erfindung betrifft eine Dreh- oder Schwenkeinrichtung einer Werkzeugmaschine, insbesondere einen NC-Rundtisch, mit einem auf einer Auflage verdrehoder verschwenkbar gelagerten Maschinenteil und einer Klemmvorrichtung zur lösbaren Fixierung des Maschinenteils in gewünschten Winkelstellungen. Siehe, zum Beispiel, US 5 918 510.

Zur Durchführung einer Mehrachsbearbeitung in einer einzigen Aufspannung werden bei modernen Bearbeitungszentren und Universal-Fräs- und Bohrmaschinen vielfach numerisch gesteuerte Dreh- oder Schwenkrundtische eingesetzt. So kann z.B. mit den gesteuerten Linearachsen der Maschine sowie der Schwenk- und Drehachse eines NC-Schwenkrundtisches eine 5-Achsen-Bearbeitung auch komplex geformter Werkstücke in einer einzigen Aufspannung durchgeführt werden, wobei Zeit- und Genauigkeitsverluste durch wiederholtes Umspannen der Werkstücke entfallen. Dreh- und Schwenkrundtische müssen jedoch zur Durchführung bestimmter Bearbeitungsoperationen in gewünschten Dreh- oder Winkelstellungen fixierbar sein. Dies kann z.B. über eine Lageregelung der Antriebsmotoren für die Schwenk- bzw. Drehbewegung der Tischplatte erfolgen. Dabei muß von den Antriebsmotoren jedoch ein relativ großes Haltemoment zur Verfügung gestellt werden, damit die Tischplatte trotz der z.B. bei einer Schruppbearbeitung möglichen hohen Kräfte gegen Verdrehung gesichert ist. Hierzu müssen die Antriebsmotoren in der Regel entsprechend groß dimensioniert sein.

Es wurden daher bereits Dreh- bzw. Schwenktische vorgeschlagen, bei denen die auf einer Konsole drehbar gelagerte Tischplatte zur Verdrehsicherung über eine gesonderte Klemmeinrichtung gegen die Konsole gezogen wird. Hierzu wurden hydraulisch verstellbare Zugelemente eingesetzt, die in eine T-förmige Ringnut an der Unterseite der Tischplatte eingreifen und die Tischplatte zur verdrehgesicherten Halterung mit ihrer Unterseite an eine entsprechende Gegenfläche der Konsole ziehen. Der Nachteil dieser Lösung besteht allerdings darin, daß die Tischplatte durch den Anzug auf die Konsole abgesenkt und u.U. auch verformt wird, was zu Ungenauigkeiten bei der Bearbeitung führen kann. Darüber hinaus wird bei jedem Anzug der Tischplatte auf die Konsole auch die Lagerung des Tischplatte erheblich belastet, was zu vorzeitigen Verschleißerscheinungen fuhren kann.

Aufgabe der Erfindung ist es, eine Dreh- oder Schwenkeinrichtung der eingangs genannten Art zu schaffen, die eine sichere Fixierung des verdreh- oder verschwenkbaren Maschinenteils auch ohne Lageveränderungen ermöglicht.

Diese Aufgabe wird erfindungsgemäß dadurch gelöst, daß die Klemmvorrichtung ein an der Auflage angeordnetes Klemmteil mit seitlich nachgiebigen Klemmelementen zum Eingriff in eine Ringnut an dem verdreh- oder verschwenkbaren Maschinenteil und ein gegenüber dem Klemmteil bewegbares Andruckteil zum Anpressen der Klemmelemente an mindestens eine Seitenwand der Ringnut aufweist.

Bei der erfindungsgemäßen Dreh- oder Schwenkeinrichtung erfolgt die Klemmung des auf einer Auflage verdreh- oder verschwenkbar gelagerten Maschinenteils nur über radiale Klemmkräfte, die zu keinem Anzug des Maschinenteils an die Auflage führen. Bei einem Drehtisch mit horizontaler Tischplatte kann z.B. durch die radiale Klemmung eine Absenkung oder Verformung der Tischplatte und eine dadurch bedingte Bearbeitungsungenauigkeit vermieden werden.

Vorteilhafte Ausgestaltungen der Erfindung sind in den Unteransprüchen angegeben.

So ist das Klemmteil in einer besonders zweckmäßigen Ausführung ein an der Auflage befestigbarer Klemmring mit gleichmäßig über den Umfang verteilten inneren und äußeren Klemmelementen, die durch das Andruckteil an die innere und äußere Seitenwand der Ringnut anpreßbar sind. Die auf die innere und äußere Seitenwand der Ringnut wirkenden Radialkräfte heben sich gegenseitig auf, so daß sich bei einer Klemmung auch keine seitliche Verschiebung des dreh- bzw. schwenkbaren Maschinenteils gegenüber der Auflage ergibt.

Ein auch über eine größere Fläche gleichmäßiger Anpreßdruck kann in einer weiteren vorteilhaften Ausführung dadurch erreicht werden, daß die Klemmelemente in Radialrichtung elastisch biegsame Ringsegmente sind.

In einer weiteren zweckmäßigen Ausführung ist das Andruckteil als ein zwischen den inneren und äußeren Klemmelementen angeordneter Konusring mit konischen Andruckflächen ausgebildet. Durch die keil- bzw. konusförmige Ausgestaltung des Andruckteils ist eine Krafterhöhung von den Axial- in die Radialspannkräfte erreichbar.

Die Ringnut und das zugehörige Klemmteil sind in vorteilhafter Weise im Bereich des Außenumfangs des verdreh- oder verschwenkbaren Maschinenteils angeordnet. Dadurch kann auch mit vergleichsweise geringen Klemmkräften ein relativ hohes Haltemoment erzeugt werden.

Die Axialverstellung des Andruckteils erfolgt in einer einfach zu steuernden Ausführung durch eine druckmittelbetätigte Kolben-Zylinder-Anordnung, die z.B. mehrere über den Umfang gleichmäßig verteilte Hydraulikzylinder enthält. Das Andruckteil kann aber auch durch andere geeignete Stellantriebe verstellbar sein.

Weitere Besonderheiten und Vorzüge der Erfindung ergeben sich aus der folgenden Beschreibung eines bevorzugten Ausführungsbeispiels anhand der Zeichnungen. Es zeigt:
- Fig. 1: eine Teilansicht eines erfindungsgemäßen NC-Rundtisches einer Werkzeugmaschine mit Klemmvorrichtung im Schnitt; und
- Fig. 2: eine perspektivische Ansicht eines Klemm- und Gegenrings der in Fig. 1 gezeigten Klemmvorrichtung; und
- Fig. 3: eine Teilansicht der Klemmvorrichtung im Schnitt.

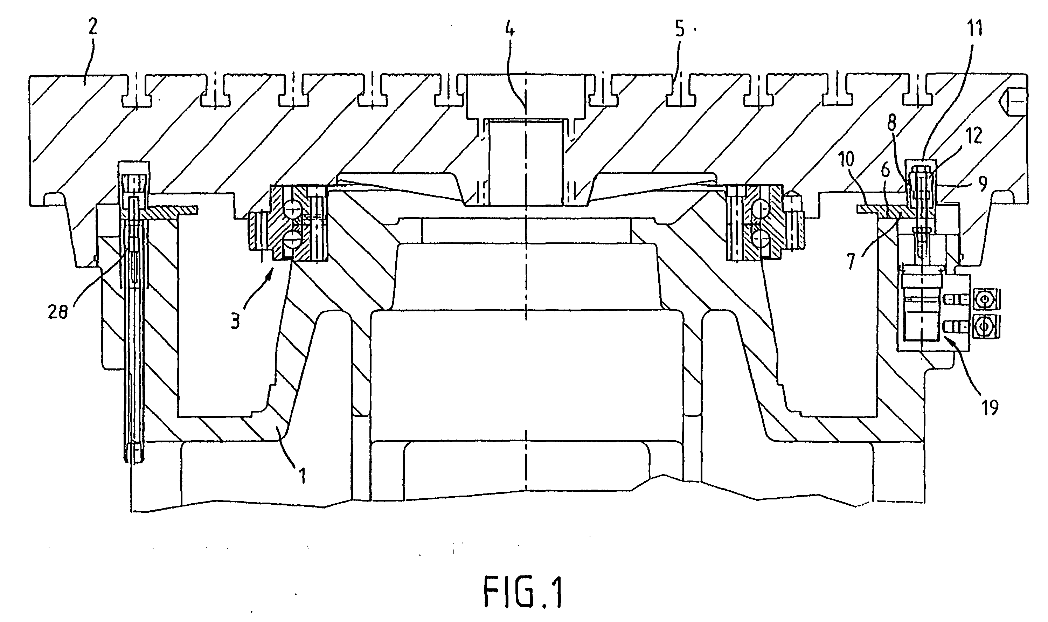

Der in Fig. 1 schematisch dargestellte NC-Rundtisch einer Universal-Fräs- und Bohrmachine enthält eine z.B. als Tischschlitten oder Konsole ausgeführte Auflage 1, auf der eine Tischplatte 2 über eine als Axial-Schrägkugellager ausgeführte Lageranordnung 3 um eine vertikale Drehachse 4 verdrehbar gelagert ist. Die Tischplatte 2 weist auf ihrer Oberseite mehrere T-förmige Spannuten 5 für die Aufspannung von Werkstücken auf. Die Tischplatte 2 kann zur Aufspannung von Werkstücken auch mit Gewindebuchsen versehen sein. Der Drehantrieb der Tischplatte 2 kann durch einen innerhalb der Auflage 1 angeordneten Antriebsmotor erfolgen, der in Fig. 1 nicht dargestellt ist.

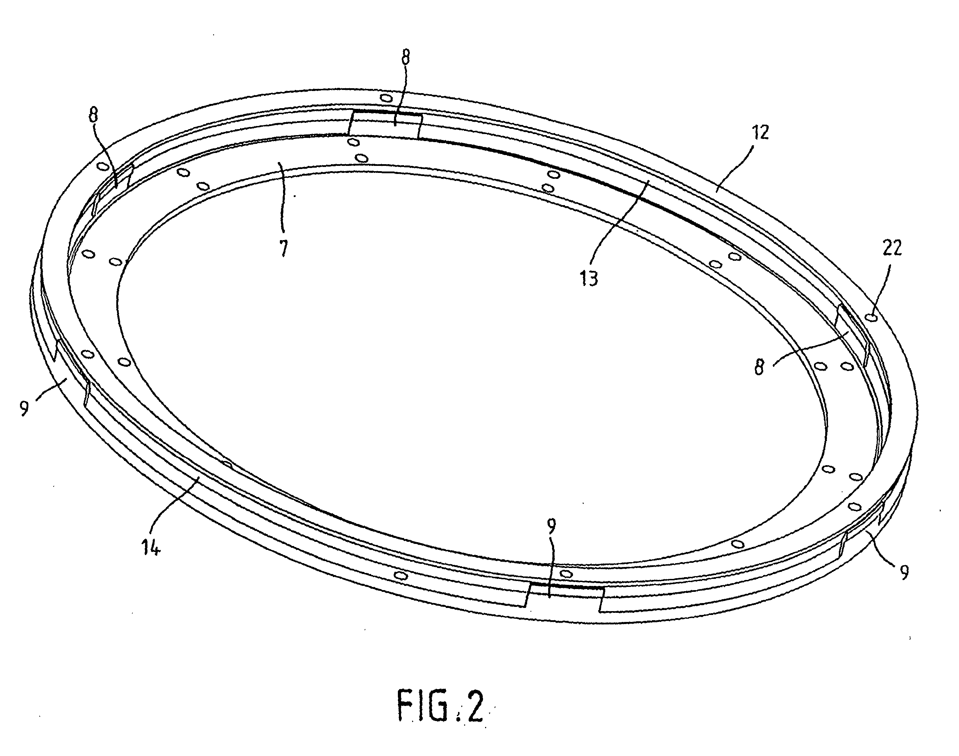

Wie aus Fig. 1 hervorgeht, enthält die Auflage 1 eine zur Drehachse 4 konzentrische äußere Ringfläche 6, auf der ein in Fig. 2 perspektivisch dargestellter Klemmring 7 mit mehreren über dessen Umfang gleichmäßig verteilten Klemmelementen in Form von jeweils zwei einander beabstandet gegenüberliegenden und in Radialrichtung elastisch biegsamen inneren und äußeren Ringsegmenten 8 und 9 befestigt ist. Die relativ dünnwandigen Ringsegmente 8 bzw. 9 sind an einer oberen Ringfläche 10 des Klemmrings 7 in Axialrichtung vorstehend angeformt und greifen in eine an der Unterseite der Tischplatte 2 zur Drehachse 4 konzentrisch angeordnete Ringnut 11 ein. Zwischen den gemäß Fig. 2 jeweils sechs inneren und äußeren Ringsegmenten 8 und 9 ist ein zum Klemmring 7 koaxialer und in Axialrichtung verschiebbarer konischer Andruckring 12 mit entgegengesetzt geneigten inneren und äußeren Konusflächen 13 und 14 zum Andruck der radial nachgiebigen Ringsegmente 8 und 9 an die Seitenwände der Ringnut 11 angeordnet.

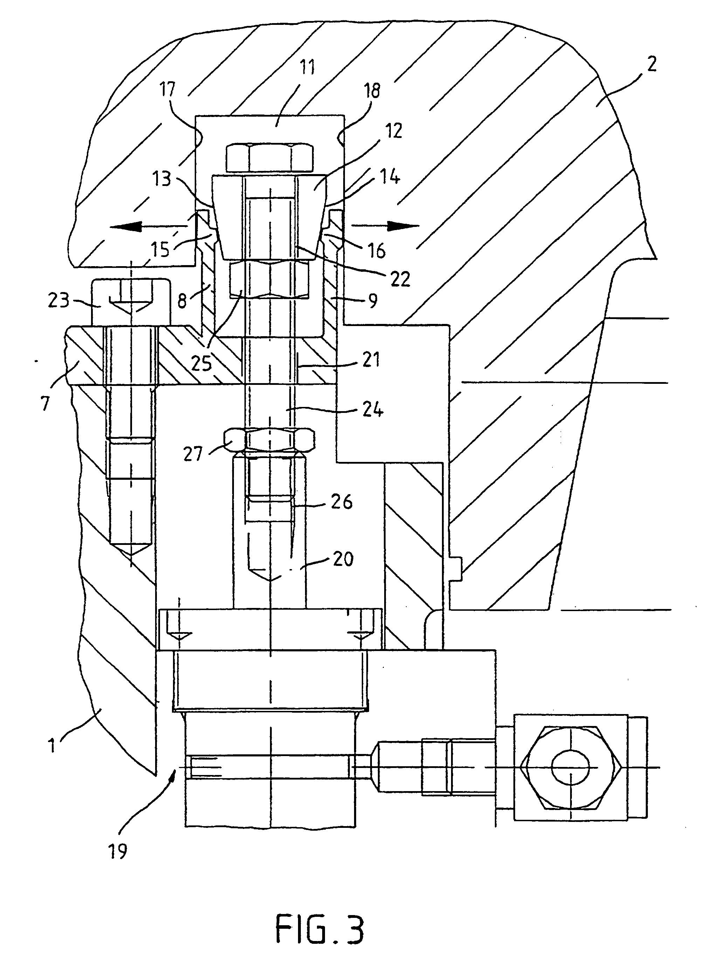

Wie besonders aus Fig. 3 hervorgeht, weist der Andruckring 12 im Bereich der Konusflächen 13 und 14 einen zu seiner Oberseite hin kontinuierlich zunehmenden Außendurchmesser und einen entsprechend abnehmenden Innendurchmesser auf. Mit seinen inneren und äußeren Konusflächen 12 und 13 liegt der Andruckring 12 derart an entsprechenden Vorsprüngen 15 bzw. 16 an der Innenseite der inneren und äußeren Ringsegmente 8 und 9 an, daß die relativ dünnwandigen und in Radialrichtung elastisch biegsamen Ringsegmente 8 und 9 bei einer Axialverschiebung des Andruckrings 12 in Richtung des Klemmrings 7 radial an die inneren und äußeren Seitenwände 17, 18 der Ringnut 10 angedrückt werden, wie dies durch die Pfeile verdeutlicht ist. Dadurch wird eine reibkraftschlüssige Verbindung zwischen der Auflage 1 und der Tischplatte 2 erreicht, die eine Verdrehung der Tischplatte 2 verhindert. Bei einer vom Klemmring 7 weg gerichteten Axialverschiebung des Andruckrings 12 kehren die Ringsegmente von selbst wieder in eine Ausgangsstellung zurück, in der zwischen den Ringsegmenten und den Wandungen der Ringnut nur eine geringe Reibung oder ein Spiel besteht.

Zur Axialverschiebung des Andruckrings 12 sind in der Auflage 1 sechs in Umfangsrichtung gleichmäßig beabstandete Hydraulikzylinder 19 angeordnet, von denen nur einer auf der rechten Seite von Fig. 1 dargestellt ist.

Die Hydraulikzylinder 19 sind gemäß Fig. 3 derart angeordnet, daß deren Kolbenstangen 20 mit jeweils einer zwischen den Ringsegmenten 8 und 9 in dem Klemmring 7 vorgesehenen Durchgangsbohrung 21 und einer entsprechenden Durchgangsbohrung 22 im Andruckring 12 fluchten. Durch die Durchgangsbohrungen 21 in dem über Schrauben 23 auf der Auflage 1 befestigten Klemmring 7 sind Gewindebolzen 24 geführt, die mit ihrem oberen Teil über eine Mutter 25 an dem Andruckring 12 fixiert und mit ihren unteren Teil in eine Gewindebohrung 26 in der Kolbenstange 20 eingeschraubt und durch eine Kontermutter 27 gesichert sind.

Durch entsprechende Ansteuerung der Hydraulikzylinder 19 kann der Andruckring 12 über die Gewindebolzen 24 in eine untere Klemmstellung bewegt werden, in der er die Ringsegmente 8 und 9 an die Innen- und Außenwand 17, 18 der Ringnut 11 andrückt. Über die Hydraulikzylinder 19 kann der Andruckring 12 auch in eine obere Lösestellung verschoben werden, wobei die elastischen Ringsegmente 8, 9 in eine nicht geklemmte Ausgangsstellung zurückkehren.

Innerhalb der Auflage 1 ist ein in Fig. 1 auf der linken Seite dargestellter Endschalter 28 angeordnet, der beim Anziehen des Andruckrings 12 an die Auflage 1 betätigt wird. Dadurch kann eine Überprüfung der Klemm- oder Lösestellung des Andruckrings 12 erfolgen.

Die Erfindung ist nicht auf das in der Beschreibung erläuterte und in den Figuren dargestellte Ausführungsbeispiel beschränkt. So kann die Klemmvorrichtung z.B. auch zur lösbaren Fixierung eines Schwenkfräskopfs oder anderer Dreh- und Schwenkeinrichtungen einer Werkzeugmaschine eingesetzt werden.

## Patentansprüche

1. Dreh- oder Schwenkeinrichtung einer Werkzeugmaschine, insbesondere NC-Rundtisch, mit
- einem auf einer Auflage (1) verdreh- oder verschwenkbar gelagerten Maschinenteil (2) und
- einer Klemmvorrichtung (7, 12) zur lösbaren Fixierung des Maschinenteils (2) in gewünschten Winkelstellungen,
**dadurch gekennzeichnet,**
**daß** die Klemmvorrichtung (7, 12) ein an der Auflage (1) angeordnetes Klemmteil (7) mit seitlich nachgiebigen Klemmelementen (8, 9) zum Eingriff in eine Ringnut (11) an dem Maschinenteil (2) und ein gegenüber dem Klemmteil (7) bewegbares Andruckteil (12) zum Anpressen der Klemmelemente (8, 9) an mindestens eine Seitenwand der Ringnut (11) aufweist.

2. Dreh- oder Schwenkeinrichtung nach Anspruch 1, **dadurch gekennzeichnet, daß** das Klemmteil ein an der Auflage (1) befestigbarer Klemmring (7) mit gleichmäßig über dessen Umfang verteilten inneren und äußeren Klemmelementen (8, 9) ist, die durch das Andruckteil (12) an die innere und äußere Seitenwand (17, 18) der Ringnut (11) anpreßbar sind.

3. Dreh- oder Schwenkeinrichtung nach Anspruch 1 oder 2, **dadurch gekennzeichnet, daß** die Klemmelemente (8, 9) in Radialrichtung elastisch biegsame Ringsegmente sind.

4. Dreh- oder Schwenkeinrichtung nach Anspruch 2 oder 3, **dadurch gekennzeichnet, daß** das Andruckteil (12) ein zwischen den inneren und äußeren Klemmelementen (8, 9) angeordneter Andruckring mit konischen Seitenflächen (13, 14) ist.

5. Dreh- oder Schwenkeinrichtung nach einem der Ansprüche 1 bis 4, **dadurch gekennzeichnet daß** die Ringnut (11) und das Klemmteil (7) im Bereich des Außenumfangs des verdreh- oder verschwenkbaren Maschinenteils (2) angeordnet sind.

6. Dreh- oder Schwenkeinrichtung nach einem der Ansprüche 1 bis 5, **dadurch gekennzeichnet, daß** das Andruckteil (12) durch eine druckmittelbetätigte Kolben-Zylinder-Anordnung (19) in Axialrichtung verstellbar ist.

7. Dreh- oder Schwenkeinrichtung nach einem der Ansprüche 1 bis 6, **dadurch gekennzeichnet, daß** in der Auflage (1) eine Einrichtung (28) zur Überwachung einer Klemm- bzw. Lösestellung des Andruckteils (12) angeordnet ist.

## Claims

1. A rotating or pivoting device in a machine tool, particularly an NC round table with
- a machine part (2) mounted rotatably or pivotally on a support (1) and
- a clamping device (7, 12) for releasably fixing the machine part (2) in required angle positions,
**characterised in that** the clamping device (7, 12) comprises a clamping part (7) disposed on the support (1) and having laterally resilient clamping elements (8, 9) for engagement in an annular groove (11) on the machine part (2) and a pressure application part (12) movable relatively to the clamping part (7) for pressing the clamping elements (8, 9) against at least one side wall of the annular groove (11).

2. A rotary or pivoting device according to claim 1, **characterised in that** the clamping part is a clamping ring (7) fixable on the support (7) and having inner and outer clamping elements (8, 9) which are distributed uniformly over its periphery and which are pressable by the pressure application part (12) against the inner and outer side wall (17, 18) of the annular groove (11).

3. A rotary or pivoting device according to claim 1 or 2, **characterised in that** the clamping elements (8, 9) are ring segments which are elastically flexible in the radial direction.

4. A rotary or pivoting device according to claim 2 or 3, **characterised in that** the pressure application part (12) is a pressure application ring which is disposed between the inner and outer clamping elements (8, 9) and which has conical side surfaces (13, 14).

5. A rotary or pivoting device according to any one of claims 1 to 4, **characterised in that** the annular groove (11) and the clamping part (7) are disposed in the region of the outer periphery of the rotatable or pivotable machine part (2).

6. A rotary or pivoting device according to any one of claims 1 to 5, **characterised in that** the pressure application part (12) is adjustable in the axial direction by a pressure medium actuated piston and cylinder arrangement (19).

7. A rotary or pivoting device according to any one of claims 1 to 6, **characterised in that** a device (28) for monitoring a clamping or release position of the pressure application part (12) is disposed in the support (1).

## Revendications

1. Dispositif de rotation ou de pivotement d'une machine-outil, notamment une table circulaire à commande numérique, avec
- une pièce de machine (2) logée sur un support (1) de manière à pouvoir tourner ou pivoter, et
- un mécanisme de serrage (7, 12) pour la fixation amovible de la pièce de machine (2) dans les positions angulaires souhaitées,
**caractérisé en ce que**
le mécanisme de serrage (7, 12) comporte une pièce de serrage (7) disposée sur le support (1), avec des éléments de serrage (8, 9) latéraux élastiques s'engageant dans une rainure annulaire (11) sur la pièce de machine (2), et une pièce de pression (12) mobile par rapport à la pièce de serrage (7) pour presser les éléments de serrage (8, 9) sur une paroi latérale au moins de la rainure annulaire (11).

2. Dispositif de rotation ou de pivotement selon la revendication 1, **caractérisé en ce que** la pièce de serrage est une bague de serrage (7) pouvant se fixer sur le support (1), avec des éléments de serrage (8, 9) intérieurs et extérieurs régulièrement répartis à sa circonférence, lesquels sont comprimables par la pièce de pression (12) contre les parois intérieure et extérieure (17, 18) de la rainure annulaire (11).

3. Dispositif de rotation ou de pivotement selon la revendication 1 ou 2, **caractérisé en ce que** les éléments de serrage (8, 9) sont des segments annulaires pouvant être élastiquement fléchis dans une direction radiale.

4. Dispositif de rotation ou de pivotement selon la revendication 2 ou 3, **caractérisé en ce que** la pièce de pression (12) est une bague de pression intercalée entre les éléments de serrage (8, 9) intérieurs et extérieurs, avec des surfaces latérales coniques (13, 14).

5. Dispositif de rotation ou de pivotement selon l'une des revendications 1 à 4, **caractérisé en ce que** la rainure annulaire (11) et la pièce de serrage (7) sont disposées au niveau de la circonférence extérieure de la pièce de machine (2) rotative ou pivotante.

6. Dispositif de rotation ou de pivotement selon l'une des revendications 1 à 5, **caractérisé en ce que** la pièce de pression (12) est réglable dans la direction axiale au moyen d'un mécanisme à cylindres et pistons (19) actionné par pression.

7. Dispositif de rotation ou de pivotement selon l'une des revendications 1 à 6, **caractérisé en ce qu'**un dispositif (28) de surveillance d'une position de serrage ou de desserrage de la pièce de pression (12) est monté sur le support (1).
